# EUROPÄISCHE PATENTANMELDUNG

(11) **EP 0 812 608 A1**
(43) Veröffentlichungstag der Anmeldung: **17.12.1997**
(21) Anmeldenummer: 97108873.7
(22) Anmeldetag: 03.06.1997
(51) Int. Cl.: B01D 19/04

(54) **Entschäumermischungen, ein Verfahren zu deren Herstellung und deren Verwendung**

(30) Priorität: 12.06.1996 DE 19623409
(71) Anmelder: BAYER AG, 51368 Leverkusen (DE)
(72) Erfinder: Grape, Wolfgang Dr., 51061 Köln (DE); Krott, Jürgen, 51377 Leverkussen (DE); Mazanek, Jan Dr., 51061 Köln (DE); Kaesler, Karl Heinz, 51467 Bergisch Gladbach (DE)

(57) **Zusammenfassung**

Die vorliegende Erfindung betrifft Mischungen, enthaltend mindestens einen Polysiloxanentschäumer, mindestens einen Emulgator, mindestens ein nichtionisches Tensid, mindestens ein Polyurethanverdickungsmittel und Wasser, ein Verfahren zu deren Herstellung und deren Verwendung.

## Beschreibung

Die vorliegende Erfindung betrifft Mischungen, enthaltend mindestens einen Polysiloxanentschäumer, mindestens einen Emulgator, mindestens ein nichtionisches Tensid, mindestens ein Polyurethanverdickungsmittel und Wasser, ein Verfahren zu deren Herstellung und deren Verwendung.

Entschäumeremulsionen sind Makroemulsionen, bei denen die mittlere Teilchengröße der dispergierten Teilchen 10 µm oder gar 100 µm durchaus überschreiten kann. Die dispergierte Phase besteht hierbei aus dem Entschäumerwirkstoff allein oder enthält diesen in einem Trägermedium, wie z.B. einem organischen Lösungsmittel.

Die Verwendung von Organopolysiloxanen als Entschäumerwirkstoff ist bekannt. Der Begriff Organopolysiloxan kann einerseits reine Siliconöle (Polydimethylsiloxane) bedeuten, andererseits aber auch Polysiloxan-Polyoxyalkylen-Blockcopolymere einschließen. In den Ölen können feinteilige Feststoffe enthalten sein, welche im allgemeinen die entschäumende Wirkung noch verstärken. Beispiele für derartige feinteilige Feststoffe sind hochdisperse, auf pyrolytischen Wege oder durch Fällung gewonnene, gegebenenfalls hydrophobierte Kieselsäuren, Magnesium- oder Aluminiumoxid sowie Magnesiumstearat.

Infolge der relativ großen Teilchen in der dispersen Phase neigen die Entschäumeremulsionen zu Sedimentation und Koaleszenz. Es ist deshalb erforderlich, die Emulsionen durch Zusatz geeigneter Hilfsstoffe (z. B. Schutzkolloide) zu stabilisieren. Dadurch wird die Viskosität der äußeren Phase erhöht, was der Sedimentation entgegenwirkt. Außerdem können sich die Schutzkolloide an der Grenzfläche der dispersen Phase anlagern und diese sterisch stabilisieren, so daß Koaleszenz verhindert wird.

Eine Aufzählung von Verbindungen, die als Schutzkolloide verwendet werden können, findet sich beispielsweise in der Veröffentlichung von W. B. Shapiro " Thickening Oil - in - Water Emulsions" in Cosmetics & Toiletries 97 (1982), S. 27 ff.

Beispiele solcher Schutzkolloide sind Cellulosederivate, wie Methylcellulose, Carboxymethylcellulose, Hydroxyethylcellulose, Hydroxypropylcellulose oder Hydroxymethylpropylcellulose, ferner synthetische Polymere, wie z.B. Polyvinylalkohol oder Polyacrylate, sowie biosynthetische Polymere, wie z.B. Xanthan Gum.

Aus DE-A 4 237 754 ist bekannt, gewisse lineare wasserlösliche oder wasserdispergierbare Polyurethane, wie z.B. 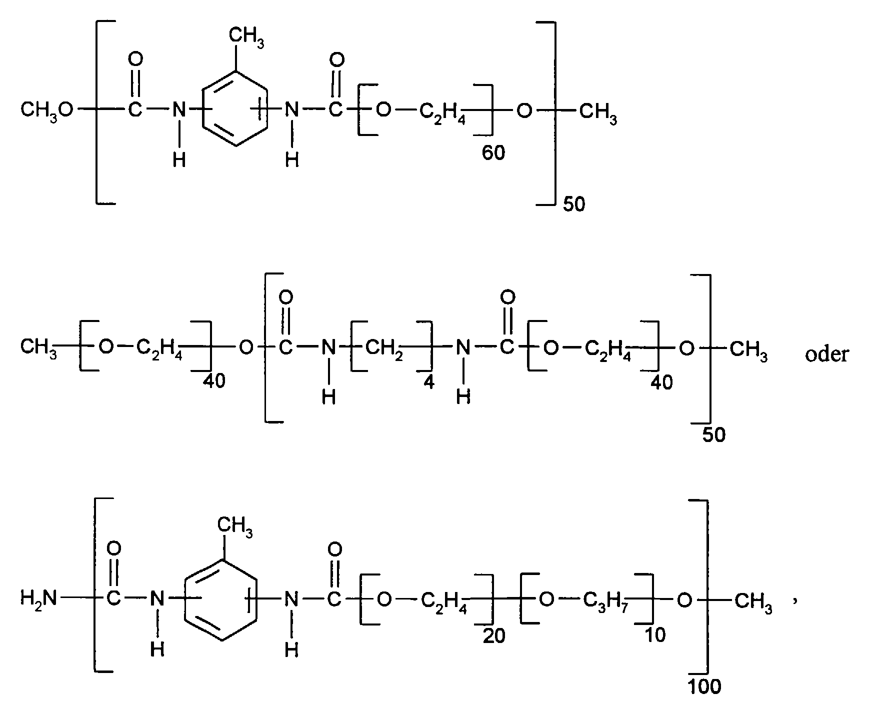 als Schutzkolloide einzusetzen.

Die dort beschriebenen Entschäumeremulsionen sind jedoch nicht ausreichend lagerstabil und wirksam.

Aufgabe der vorliegenden Erfindung war daher die Bereitstellung von im Hinblick auf die Entschäumung sehr effektiven und auch sehr lagerstabilen Mischung.

Überraschenderweise wurde nun gefunden, daß diese Eigenscharten verbessert werden können, wenn assoziative Verdickungsmittel, d.h. Verdickungsmittel, die aus Molekülen mit hydrophilen und (gezielt eingebauten) hydrophoben Gruppen bestehen, auf Basis von Polyurethan in Kombination mit bestimmten nichtionischen Tensiden eingesetzt werden.

Gegenstand der vorliegenden Erfindung sind daher Mischungen, enthaltend
mindestens einen Polysiloxanentschäumer A),
mindestens einen Emulgator B),
mindestens ein nichtionisches Tensid C) der Formel R-(AO)ₓOH mit
   - R =: gegebenenfalls substituierten C₆-C₁₄-aromatischer Rest,
   - AO =: C₂-C₄-Alkylenoxid und
   - x =: 1 bis 300,
   mindestens ein Polyurethan-Verdickungsmittel mit einem mittleren Molekulargewicht von 5.000 bis 60.000 D) und
Wasser E).

Polysiloxanentschäumer A) umfaßt Entschäumerwirkstoffe auf Basis von Polysiloxan, wie sie z.B. in EP-A 322 322, DE-A 4 343 185 oder EP-A 434 060 beschrieben sind. Bevorzugt ist A) jedoch ein Sililconöl wie z.B. Polydimethylsiloxan und/oder organisch modifizierte Siloxane, wie z.B. Polyethersiloxane, oder diese in Kombination mit mindestens einem Feststoff. Bei dem Feststoff handelt es sich vorzugsweise um einen hydrophoben Feststoff. Der Feststoff kann dabei nach gängigen Methoden vorab oder in situ hydrophobiert werden oder bereits hydrophob sein.
Bei dem Feststoff handelt es sich vorzugsweise um Kieselsäure, Magnesium- oder Aluminiumoxid oder Magnesiumstearat, besonders bevorzugt Kieselsäure.

Als Emulgator B) können sowohl nichtionische als auch anionische sowie kationische Emulgatoren eingesetzt werden. Beispiele für nichtionische Emulgatoren sind Alkylpolyglykolether, vorzugsweise Alkylpolyglykolether mit 2 bis 100 Ethylenoxideinheiten und Alkylresten von 8 bis 20 Kohlenstoffatomen, Alkylarylpolyglykolether, vorzugsweise Alkylarylpolyglykolether mit 2 bis 100 Ethylenoxideinheiten und 8 bis 20 Kohlenstoffatomen in den Alkyl- und Arylresten, Ethylenoxid/Propylenoxid-Blockpolymere, vorzugsweise solche mit 8 bis 100 Ethylenoxideinheiten, Fettsäurepolyglykolester, vorzugsweise C₆-C₂₄-Fettsäurepolyglykolester, die 2 bis 100 Ethylenoxideinheiten aufweisen, wie z.B. Polyoxyethylentriglyceride, Naturstoffe und deren Derivate, wie z.B. Lecithin, Lanolin, Saponin, Cellulose, Cellulosealkylether und Carboxylalkylcellulose, deren Alkylgruppen jeweils bis zu 4 Kohlenstoffatome besitzen sowie polare Gruppen enthaltende lineare Organopolysiloxane, insbesondere solche mit Alkoxygruppen mit bis zu 24 Kohlenstoffatomen und/oder bis zu 40 Ethylenoxid- und/oder Propylenoxidgruppen.

Beispiele für anionische Emulgatoren sind Alkylsulfate, besonders solche mit einer Kettenlänge von 8 bis 18 Kohlenstoffatomen, Alkyl- und Alkylethersulfate mit 8 bis 18 Kohlenstoffatomen im hydrophoben Rest und 1 bis 40 Ethylenoxid- bzw. Propylenoxideinheiten, Sulfonate, bevorzugt C₈-C₁₈-Alkylsulfonate, C₈-C₁₈-Alkylarylsulfonate, Tauride, Ester und Halbester der Sulfobernsteinsäure mit einwertigen Alkoholen oder Alkylphenolen mit 4 bis 15 Kohlenstoffatomen, wobei diese Alkohole oder Alkylphenole auch mit 1 bis 40 Ethylenoxideinheiten ethoxyliert sein können, Alkyl- und Ammoniumsalze von Carbonsäuren mit 8 bis 20 Kohlenstoffatomen im Alkyl-, Aryl-, Alkaryl- oder Aralkylrest sowie Phosphorsäureteilester und deren Alkali- und Ammoniumsalze, bevorzugt Alkyl- und Alkarylphosphate mit 8 bis 20 Kohlenstoffatomen im organischen Rest, Alkylether- bzw. Alkaryletherphosphate mit 8 bis 20 Kohlenstoffatomen im Alkyl- bzw. Alkarylrest mit 1 bis 40 Ethylenoxideinheiten.

Beispiele für kationische Emulgatoren sind Salze von primären, sekundären und tertiären Fettaminen mit 8 bis 24 Kohlenstoffatomen mit Essigsäure, Schwefelsäure, Salzsäure und Phosphorsäure, quarternäre Alkyl- und Alkylbenzolammoniumsalze, vorzugsweise solche, deren Alkylgruppe 6 bis 24 Kohlenstoffatome besitzen, besonders bevorzugt Halogenide, Sulfate, Phosphate und Acetate, Alkylpyridinium-, Alkylimidazolinium- und Alkyloxazoliniumsalze, vorzugsweise solche, deren Alkylkette bis zu 18 Kohlenstoffatome besitzt, speziell die Halogenide, Sulfate, Phosphate und Acetate.

In einer bevorzugten Ausführungsform der vorliegenden Erfindung ist der Emulgator mindestens ein nichtionischer Emulgator, besonders bevorzugt Polyoxyethylentriglyceride und/oder polyoxyethylierte höherkettige Alkohole, ganz besonders bevorzugt Polyoxyethylentriglyceride und polyoxyethylierte höherkettige Alkohole.

Komponente C) ist im Sinne der Erfindung vorzugsweise mindestens eine Verbindung der Formel

R-[T-(Q')_{w}-H]_{y} (I),

in welcher
- R: einem linearen oder verzweigten Kohlenwasserstoffrest, vorzugsweise einem aliphatischen, aromatischen, araliphatischen oder alkylaromatischen Kohlenwasserstoffrest, mit 6 bis 50 Kohlenstoffatomen, und/oder einem mehrere aromatische Ringe umfassenden und/oder inerte Substituenten, wie z.B. Alkylreste, aufweisenden aromatischen oder alkylaromatischen C₆-C₄₀-Kohlenwasserstoffrest,
- T: Sauerstoff oder einen Rest der Formel 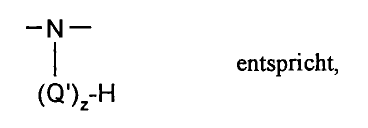
- Q': Alkylenoxideinbeiten, vorzugsweise mit C₂-C₄-Kohlenstoffatomen, besonders bevorzugt für Ethylenoxid- und/oder Propylenoxid-Einheiten steht, mit der Maßgabe, daß mindestens 70 Mol-% dieser Einheiten Ethylenoxideinheiten darstellen,
- z: eine Zahl von 1 bis 300, vorzugsweise 2 bis 200 und besonders bevorzugt 5 bis 100,
- y: eine Zahl von 1 bis 20, vorzugsweise 1 bis 10 und besonders bevorzugt 1 bis 4 und
- w: eine Zahl von 1 bis 300, vorzugsweise 2 bis 200 und besonders bevorzugt 5 bis 100 ist.

Es handelt sich bei den Komponenten C) um an sich bekannte Umsetzungsprodukte von Alkylenoxiden mit geeigneten Startermolekülen, wobei als Alkylenoxide insbesondere Ethylenoxid, Propylenoxid oder die isomeren Butylenoxide in Betracht kommen. Vorzugsweise handelt es sich bei den Alkylenoxiden jedoch um Ethylenoxid oder um Gemische von Ethylenoxid mit Propylenoxid mit einem Gehalt an Ethylenoxid von mindestens 70 Mol-%, wobei Ethylenoxid- bzw. Propylenoxideinheiten statistisch verteilt oder als Blockpolymere vorliegen können.

Geeignete Startermoleküle sind dabei vorzugsweise mono- oder polyfunktionelle Alkohole, Phenole oder Amine wie beispielsweise n-Hexanol, n-Dodecanol, Stearylalkohol, Phenol, technisches Isononylphenol, oder Verbindungen der Formeln 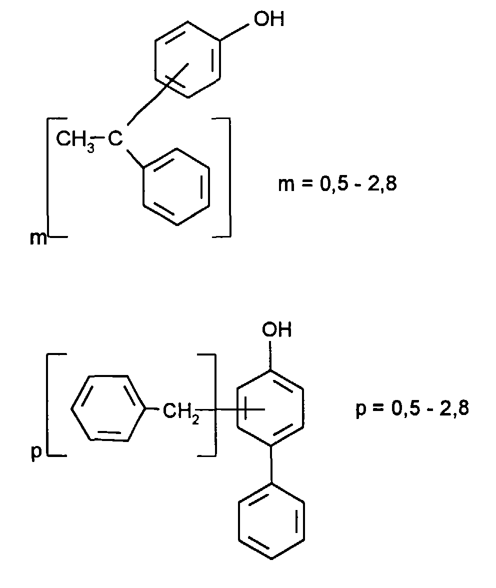 wobei für m und p statistische Mittelwerte angegeben sind.

Als Amine sind n-Hexylamin, Hexamethylendiamin, n-Dodecylamin oder Stearylamin bevorzugt.

Besonders bevorzugt handelt es sich bei den nichtionischen Tensiden gemäß Formel I um Verbindungen, in denen R 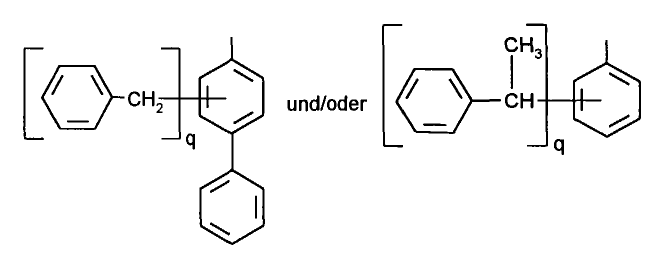 und q eine Zahl zwischen 0,5 und 2,8, bevorzugt zwischen 1,0 (statistisch) und 2,5, besonders bevorzugt zwischen 1,5 und 2,5 ist.

Komponente D) umfaßt alle an sich bekannten Polyurethanverdickungsmittel.

Verdickungsmittel auf Polyurethanbasis für wäßrige Systeme werden in zahlreichen Veröffentlichungen beschrieben (vgl. z. B. DE-A 1 444 243, DE-A 3 630 319, EP-A-0 031 777, EP-A-0 307 775, EP-A-0 495 373, US-A 4 079 028, US-A 4 155 892, US-A 4 499 233, US-A 5 023 309 oder EP-A 639 595).

Diesen Verdickungsmitteln des Standes der Technik gemeinsam ist das gleichzeitige Vorliegen von (i) hydrophilen Segmenten in einer Menge von mindestens 50 Gew.-%, (ii) hydrophoben Segmenten in einer Menge von maximal 10 Gew.-% und (iii) Urethangruppen. Unter "hydrophilen Segmenten" sind hierbei insbesondere Polyetherketten mit mindestens 5 Kettengliedern zu verstehen, deren Alkylenoxid-Einheiten zumindest zu 60 Mol-% aus Ethylenoxideinheiten bestehen. Unter "hydrophoben Segmenten" sind hierbei insbesondere Kohlenwasserstoff-Segmente mit mindestens 6 Kohlenstoffatomen zu verstehen.

Die nachstehend genannte Komponente D) der erfindungsgemäßen Zubereitungen entspricht vorzugsweise dieser Definition. Bevorzugt werden dabei Polyurethanverdicker gemäß US-A 4 079 028, Tab. 2 - 4 und/oder gemäß EP-A 639 595. Besonders bevorzugt sind dabei Polyurethan-Verdickungsmittel mit hydrophoben Segmenten, die 12 bis 18 Kohlenstoffatomen aufweisen.

Die erfindungsgemäßen Mischungen können zudem Zusätze, wie bakterienhemmende Mittel, wie z.B. formaldehydabspaltende Produkte, wie z.B. Benzylformal, enthalten.

Bevorzugt sind Mischungen, die
1 bis 75 Gew.-%, besonders bevorzugt 5 bis 60 Gew.-%, ganz besonders bevorzugt 10 bis 50 Gew.-% mindestens eines Polysiloxanentschäumer A),
0,5 bis 15, besonders bevorzugt 1 bis 12, ganz besonders bevorzugt 2 bis 10 Gew.-% mindestens eines Emulgators B),
0,1 bis 10, bevorzugt 0,5 bis 6, ganz besonders bevorzugt 0,5 bis 3 Gew.-% mindestens eines nichtionischen Tensides C),
0,1 bis 10, besonders bevorzugt 0,5 bis 8, ganz besonders bevorzugt 0,5 bis 6 Gew.-% mindestens eines Polyurethanverdickungsmittels D) mit einem mittleren Molekulargewicht von 5.000 bis 60.000, bevorzugt 7.000 bis 30.000, besonders bevorzugt 10.000 bis 20.000 und
mindestens 25 % Wasser E) enthält.

Gegenstand der vorliegenden Erfindung ist weiterhin ein Verfahren zur Herstellung der erfindungsgemäßen Mischung, wonach aus den Komponenten A), B) und E) eine Emulsion hergestellt wird, in die eine wäßrige Lösung von C) und D) nachdosiert wird. Als Aggregate werden vorzugsweise schnellaufende Rührer, Rotorstatormischer sowie Kolloidmühlen oder dergleichen eingesetzt.

Gegenstand der vorliegenden Erfindung ist weiterhin die Verwendung der erfindungsgemäßen Mischung als Entschäumeremulsion.

### Ausführungbeispiele

Zur Prüfung der entschäumenden Wirkung der erfindungsgemäßen Mischungen wird wie folgt verfahren:

5 g des zu prüfenden Entschäumers wurden mit 45 ml destilliertem Wasser umgeschwenkt, bis der Entschäumer gelöst war (Losung A). Nach 20 Minuten wurde die Oberfläche der Verdünnung beurteilt, sie wurde als gut eingestuft, sofern sie keine öligen oder fettartig-klumpigen Ausscheidungen aufwies (in den Beispielen aufgeführt unter Bewertung Emulsion). Zur Bestimmung der entschäumenden Wirkung wurden 0,10, 0,25 bzw. 0,5 ml der Losung A in einen Schaumschlagmeßzylinder gegeben. 200 ml der Lösung B, die durch Verdünnung von 25 ml Mersolat H 30 auf 2 l hergestellt wurde, wurde über die Lösung A gegossen. Anschließend wurden die beiden Lösungen mit dem Schaumschlaggerät, eingestellt auf 50 Schläge in 35 Sekunden, vermengt. Nach 35 Sekunden wird der Rührvorgang gestoppt und die Schaumhöhe abgelesen. Mittels Stoppuhr wurde die Zeit ermittelt, die verstrich, bis das Ausgangsvolumen von 200 ml wieder erreicht wurde. Diese Vorgehensweise entspricht dem in der Technik als Schlachter-Dierkes-Methode bekannten Verfahren.

### Beispiel 1

Es wurde eine 55 %ige Silikonentschäumeremulsion aus folgenden Bestandteilen hergestellt:

55 % Silikonentschäumercompound, bestehend aus 92 % Silikonöl der Viskosität 1 000 mPas und 8 % hydrophobierte Fällungskieselsäure (Sipernat D 10 der Fa. Degussa), 6,5 % polyoxyethylierter Tridecylalkohol, 5 % Polyoxyethylentriglycerid, 0,2 % des bakterienhemmenden Mittels Preventol D 2 der Firma Bayer und 33,3 % Wasser.

### Beispiele 2 bis 8

Ausgehend von Beispiel 1 wurde eine 40 %ige Entschäumeremulsion hergestellt. Zum Einsatz kamen dabei 25,2 % Wasser und 72,8 % der 55 %igen Entschäumeremulsion aus Beispiel 1, 2 % des nachfolgend aufgeführten PU-Verdickers und 2 % eines aus Starter 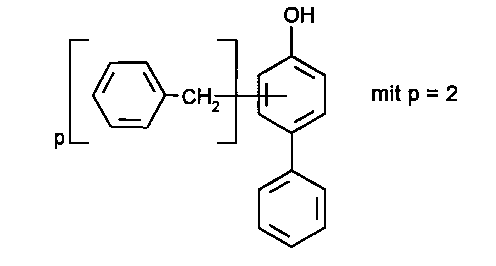 und 14 mol Ethylenoxid hergestellten nichtionischen Tensids (Komponente C).

Die PU-Verdicker 1, 2 und 9 entsprechen folgenden Formeln: 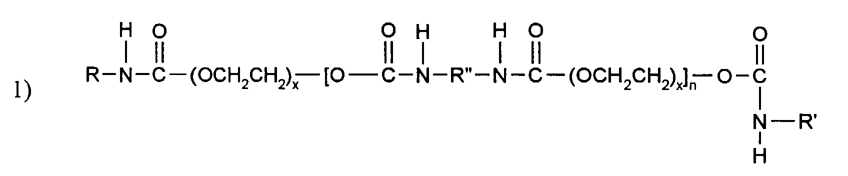 mit
R = n-C₁₈H₃₇
R' = n-C₁₈H₃₇
R'' = C₁₃H₂₂
x = 136 und
n = 1,
siehe US-A 4 079 028, Beispiel 9 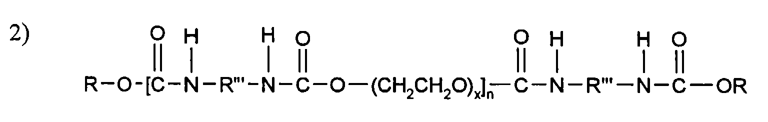 mit
R = n-C₁₈H₃₇
R''' = C₇H₆
x = 136 und
n = 2
siehe US-A 4 079 028, Beispiel 25 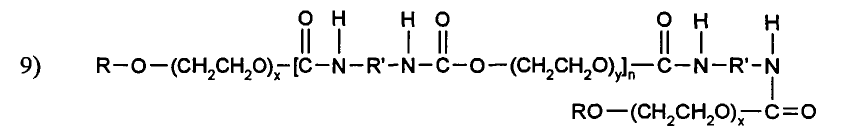 mit
R = n-C₁₈H₃₇,
R' = C₇H₆
x = 59, y = 136 und n = 1,
siehe Beispiel 79 in US-A 4 079 028.

Weitere PU-Verdicker und deren Einsatzmengen sind in Tabelle 1 aufgeführt.

**Tabelle 1**

| PU-Verdicker | Charakterisierung/Umsetzungsprodukt aus | | | Literaturverweis |
|---|---|---|---|---|
| | Polyethylenglykol | Diisocyanat | Diol | |
| 3 | Stearylalkohol gestarteter Polyethylenoxidpolyether (0,2 mol) + Polyethylenglykol (0,1 mol) | HDI (0,275 mol) | Dodecandiol 1/12 (0,05 mol) | Bsp. 5 in EP-A 0 639 595 |
| 4 | Stearylalkohol gestarteter Polyethylenoxidpolyether (0,2 mol) + Polyethylenglykol (0,1 mol) | HDI (0,275 mol) | Octadecandiol 1,18 (0,025 mol) | Bsp. 8 in EP-A 0 639 595 |
| 5 | Stearylalkohol gestarteter Polyethylenoxidpolyether (0,2 mol) + Polyethylenglykol (0,1 mol) | HDI (0,275 mol) | Dodecandiol 1,12 (0,1 mol) | Bsp. 6 in EP-A 0 639 595 |
| 6 | Stearylalkohol gestarteter Polyethylenoxidpolyether (0,2 mol) + Polyethylenglykol (0,1 mol) | HDI (0,275 mol) | Hexandiol-1,6 (0,1 mol) | Bsp. 2 in EP-A 0 639 595 |

Die PU-Verdicker 3, 4, 5 und 6 wurden folgendermaßen hergestellt.

748 g (0,2 mol) eines auf Stearylalkohol gestarteten Polyethylenoxidpolyethers des mittleren Molgewichtes von 3 740 wurden zusammen mit 748 g (0,1 mol) Polyethylenglykol des Molekulargewichts 7 480 aufgeschmolzen und auf 120°C erhitzt und während 3 Stunden/10 mbar entwässert. Nach Zufügen von 5,9 g des in der Tabelle 1 aufgeführten Diols wurden unter Rühren bei 80°C 46,2 g (0,275 mol) Hexamethylyendiisocyanat (HDI) auf einmal zugegeben. Nach 2 Stunden bei 80°C wurde mit 200 mg Zinndioctoat katalysiert und die Reaktion während 2 Stunden bei 120°C beendet. Nach Ausgießen auf Blech und Erkalten wurde ein schwach gelbliches Wachs erhalten.

Weitere Einzelheiten sind in der Tabelle 1 und die Ergebnisse sind in Tabelle 2 aufgeführt.

**Tabelle 2**

| Beispiel-Nr. | 2 | 3 | 4 | 5 | 6 | 7 | 8 |
|---|---|---|---|---|---|---|---|
| | | | | | | | |

| Verdicker-Nr. | 1 | 2 | 3 | 4 | 5 | 6 | 7 |
|---|---|---|---|---|---|---|---|
| Bemerkung | stabil | stabil | stabil | stabil | stabil | stabil | stabil |
| Bewertung Emulsion | gut | gut | gut | gut | gut | gut | gut |
| 0,50 ml | 50ml/<1" | 50ml/<1" | 150ml/7" | 150ml/5" | 100ml/4" | 100ml/5" | 50ml/<3" |
| 0,25 ml | 50ml/<1" | 50ml/<3" | 200ml/30" | 200ml/30" | 150ml/10" | 150ml/10" | 50ml/<3" |
| 0,10 ml | 100ml/4" | 100ml/4" | | | | | 100ml/3" |

### Beispiel 9 bis 15

Ausgehend von Beispiel 1 wurde eine 30 %ige Entschäumeremulsion mit folgender Zusammensetzung hergestellt:

54,5 % der 55 %igen Entschäumeremulsion aus Beispiel 1, 3 % der in den Beispielen 2 bis 10 aufgeführten PU-Verdicker und 42,4 % Wasser. Dabei wurden folgende Ergebnisse erhalten (siehe Tabelle 3).

**Tabelle 3**

| Beispiel-Nr. | 9 | 10 | 11 | 12 | 13 | 14 | 15 |
|---|---|---|---|---|---|---|---|
| | | | | | | | |

| Verdicker-Nr. | 1 | 2 | 3 | 4 | 5 | 6 | 7 |
|---|---|---|---|---|---|---|---|
| Bemerkung | stabil | stabil | stabil | stabil | stabil | stabil | stabil |
| Bewertung Emulsion | gut | gut | gut | gut | gut | gut | gut |
| 0,50 ml | 50ml/6" | 50ml/5" | 50ml/5" | 50ml/10" | 50ml/3" | 100ml/7" | 100ml/4" |
| 0,25 ml | 100ml/17" | 100ml/14" | 150ml/20" | 200ml/40" | 150ml/6" | 200ml/40" | 150ml/13" |

### Beispiel 16 und 17

Ausgehend von Beispiel 1 wurde eine 20 %ige Entschäumeremulsion hergestellt. Deren Zusammensetzung und Ergebnisse sind in der nachfolgenden Tabelle 4 dargestellt.

**Tabelle 4**

| Beispiel-Nr. | 16 | 17 |
|---|---|---|
| | % | % |
| Wasser | 61,6 | 60,6 |
| Verdicker-Nr. 9 | 2,0 | 3,0 |
| 55 %ige Emulsion Beispiel 2 | 36,4 | 36,4 |
| Bemerkung | stabil | stabil |
| Bewertung Emulsion | noch gut | gut |
| 0,50 ml | 50 ml/2" | 50 ml/<3" |
| 0,25 ml | 50 ml/5" | 100 ml/4" |

### Beispiel 18 (Vergleichsbeispiel)

Messung der entschäumenden Wirkung eines konventionellen Silikonentschäumers, bestehend aus
- 34 %: eines Siliconentschäumercompounds aus 94 % Siliconöl und 6 % hydrophobierter Kieselsäure,
- 11 %: eines polyoxyethylierten Oleylalkohols,
- 6 %: eines polyoxyethylierten Nonylphenols,
- 0,2 %: des bakterienhemmenden Mittels Preventol D2 und
- 48 %: demineralisiertem Wasser.

Bewertung der Emulsion noch gut. 0,5 ml von Lösung A und 200 ml von Lösung B ergaben eine Schaumhöhe von 200 ml und eine Schaumzerfallzeit von 29 Sekunden, während 0,25 ml der Lösung A auf 200 ml der Lösung B eine Schaumhöhe von 300 ml und eine Schaumzerfallszeit von 100 Sekunden ergaben.

## Patentansprüche

1. Mischungen, enthaltend
mindestens einen Polysiloxanentschäumer A),
mindestens einen Emulgator B),
mindestens ein nichtionisches Tensid C) der Formel R-(AO)ₓOH mit
R = gegebenenfalls substituierten C₆-C₁₄-aromatischer Rest,
AO = C₂-C₄-Alkylenoxid und
x = 1 bis 300,
mindestens ein Polyurethan-Verdickungsmittel mit einem mittleren Molekulargewicht von 5.000 bis 60.000 D) und
Wasser E).

2. Mischung nach Anspruch 1, dadurch gekennzeichnet, daß A) Silikonöl und/oder organisch modifizierte Siloxane oder diese in Kombination mit mindestens einem Feststoff ist.

3. Mischung nach einem der Ansprüche 1 oder 2, dadurch gekennzeichnet, daß B) mindestens ein nichtionischer Emulgator ist.

4. Mischung nach Anspruch 3, dadurch gekennzeichnet, daß B) ein Polyoxyethylenglycerid und/oder ein polyoxyethylierter höherkettiger Alkohol ist.

5. Mischung nach einem oder mehreren der Ansprüche 1 bis 4, dadurch gekennzeichnet, daß C) mindestens eine Verbindung der Formel
R-[T-(Q')_{w}H]_{y} (I)
ist, in welcher
R einem linearen oder verzweigten C₆-C₅₀-Kohlenwasserstoffrest und/oder einem mehrere aromatische Ringe umfassenden und/oder einem inerte Substituenten aufweisenden aromatischen oder alkylaromatischen C₆-C₄₀-Kohlenwasserstoffrest,
T Sauerstoff oder einen Rest der Formel 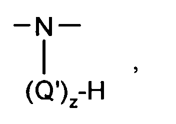
Q' Alkylenoxideinheiten, entspricht, mit der Maßgabe, daß mindestens 70 mol-% dieser Einheiten Ethylenoxideinheiten darstellen,
z eine Zahl von 1 bis 300,
y eine Zahl von 1 bis 20 und
w eine Zahl von 1 bis 300 ist.

6. Mischung nach Anspruch 5, dadurch gekennzeichnet, daß in der Verbindung der Formel (I) R = 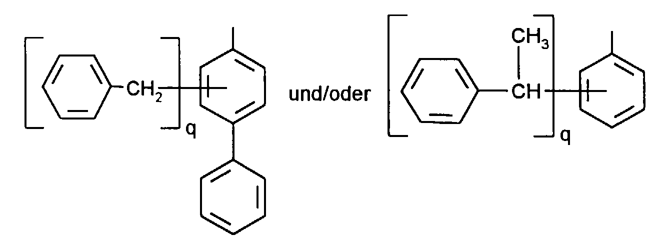 und q eine Zahl zwischen 0,5 und 2,8 ist.

7. Mischung nach einem oder mehreren der Ansprüche 1 bis 6, dadurch gekennzeichnet, daß D) ein Polyurethan-Verdickungsmittel mit hydrophoben Segmenten, die 12 bis 18 Kohlenstoffatome aufweisen, ist.

8. Mischung nach einem oder mehreren der Ansprüche 1 bis 7, dadurch gekennzeichnet, daß diese
1 bis 75 % mindestens eines Polysiloxanentschäumers A),
0,5 bis 15 % mindestens eines Emulgators B),
0,1 bis 10 % mindestens eines nichtionisches Tensids C) und
0,1 bis 10 % mindestens eines Polyurethan-Verdickungsmittels mit einem mittleren Molkulargewicht von 5000 bis 6000 D)
und mindestens 25 % Wasser E) enthält.

9. Verfahren zur Herstellung einer Mischung nach einem oder mehreren der Ansprüche 1 bis 8, dadurch gekennzeichnet, daß aus A), B) und E) eine Emulsion hergestellt wird, in die eine wäßrige Lösung von C) und D) nachdosiert wird.

10. Verwendung der Mischung nach einem oder mehreren der Ansprüche 1 bis 8 als Entschäumeremulsion.
